# EUROPÄISCHE PATENTSCHRIFT

(11) **EP 1 026 045 B1**
(45) Veröffentlichungstag und Bekanntmachung des Hinweises auf die Patenterteilung: **20.07.2005**
(21) Anmeldenummer: 00100939.8
(22) Anmeldetag: 19.01.2000
(51) Int. Cl.: B60R 19/56

(54) **Vorrichtung zur Aufnahme von schwenk- und fixierbaren seitlichen Unterfahrschutzplanken eines Lastkraftwagens**
Device for receiving a pivotable and attachable lorry side screening
Dispositif récepteur d'une glissière de protection latérale basculable et attachable d'un camion

(30) Priorität: 03.02.1999 DE 19904382
(43) Veröffentlichungstag der Anmeldung: 09.08.2000
(73) Patentinhaber: MAN Nutzfahrzeuge Aktiengesellschaft, 80976 München (DE)
(72) Erfinder: Beck, Klaus, Dipl.-Ing., 82216 Gernlinden (DE); Schwäbe, Rolf, 85757 Karlsfeld (DE); Übelacker, Andreas, Dipl.-Ing., 82282 Unterschweinbach (DE)

(56) Entgegenhaltungen:
- DE-A- 4 314 415
- DE-A- 4 324 803

## Beschreibung

Die Erfindung betrifft eine Vorrichtung zur Aufnahme von schwenk- und fixierbaren seitlichen Unterfahrschutzplanken eines Lastkraftwagens gemäß dem Oberbegriff des Anspruchs 1.

Eine derartige Vorrichtung ist aus DE 4324 803A bekannt.

Ein Unterfahrschutz dieser Art ist aus der DE 93 16 781 U1 bekannt. Bei dieser bekannten Anordnung ist das die seitlichen Unterfahrschutzplanken aufnehmende Tragstück mittels einer rahmenfest auf der zugeordneten Haltestrebe angeordneten Achse schwenkbar gelagert und mittels eines Steckers fixierbar. Zusätzlich ist eine Federanordnung vorgesehen, durch die die in der Fixierstellung aneinander gelageraten Teile gegeneinander verspannt werden. Die Verwendung einer zusätzlichen Federanordnung ist unerwünscht. Zudem erweist sich die Verwendung eines Steckers als nicht bedienungsfreundlich.

Aus der DE 41 12 372 C2 ist ein seitlicher Unterfahrschutz für Lastkraftwagen mit am Rahmen oder am Aufbau angebrachten Halterungen zur Befestigung von im Abstand übereinander angeordneter Unterfahrschutzplanken bekannt. Die untere Unterfahrschutzplanke kann über eine Drehachse in eine horizontale Parallellage zur oberen Unterfahrschutzplanke schwenkbar sein.

Hiervon ausgehend ist es daher die Aufgabe der vorliegenden Erfindung, mit einfachen und kostengünstigen Mitteln eine Vorrichtung eingangs erwähnter Art zu schaffen, mittels dieser sämtliche seitliche Unterfahrschutzplanken ausschwenkbar und geräuschhindernd fixierbar sind.

Diese Aufgabe wird erfindungsgemäß dadurch gelöst, daß im Bereich jedes Lagers ein aus einem Dämpfungsmaterial bestehender Dämpfungsblock vorgesehen ist, der mit einer dem zugehörigen Lagerbolzen zugeordneten Aufnahmeausnehmung versehen ist, und wobei zumindest die Aufnahmeausnehmung des dem Fixierlager zugeordneten Dämpfungsblockes als offene Rastausnehmung ausgebildet ist.

In vorteilhafter Weise sind beide Lagerbolzen in ihrer Fixierstellung in einem Dämpfungsblock aufgenommen, so daß sich eine für die Geräuschvermeidung günstige Materialpaarung ergibt und eventuelles Bewegungsspiel ausgeschaltet wird. Ein weiterer Vorteil ist in der zuverlässigen Fixierung der seitlichen Unterfahrschutzplanken zu sehen. Die durch die Dämpfungsblöcke gewährleistete Elastizität stellt sicher, daß bei Verwindungen der Fahrzeugchassis keine Zwangskräfte auftreten, und daß auch Fertigungstoleranzen und kleinere Verformungen nach Unfällen aufgefangen werden können.

In vorteilhafter Weise werden beim Ausschwenken und Fixieren der seitlichen Unterfahrschutzplanken keine Werkzeuge etc. benötigt. Da die Lageranordnung ein Verschiebeschwenklager und ein Fixierlager enthält, ist zudem sichergestellt, daß die seitlichen Unterfahrschutzplanken unverlierbar angeordnet sind. Die aus Dämpfungsmaterial bestehenden Dämpfungsblöcke sind in vorteilhafter Weise auch unempfindlich gegen Korrosion und Witterungseinflüsse, insbesondere Vereisung. Zudem ist eine vergleichsweise einfache Herstellung gewährleistet.

Vorteilhafte Ausgestaltungen und zweckmäßige Fortbildungen der übergeordneten Maßnahmen sind in den Unteransprüchen angegeben. So ist das Fixierlager zweckmäßig so angeordnet, daß die Schwerkraft einer Entrastung der Lageranordnungen entgegenwirkt, was eine hohe Sicherheit gewährleistet.

Eine weitere zweckmäßige Maßnahme kann darin bestehen, daß die Aufnahmeausnehmung des dem Verschiebeschwenklager zugeordneten Dämpfungsblockes mit Rastkanten versehen ist, die den diesen zugeordneten Lagerbolzen in der Fixierstellung hintergreifen. Diese Maßnahmen ergeben praktisch eine Doppelrastung und damit einen besonders guten Halt des Lagerbolzens im Verschiebeschwenklager.

Zweckmäßig können die Aufnahmeausnehmungen des dem Verschiebeschwenklager zugeordneten Dämpfungsblockes und des dem Fixierlager zugeordneten Dämpfungsblockes als in Verschieberichtung offene Rastausnehmungen ausgebildet sein. Dies ergibt in vorteilhafter Weise eine gleiche Ausgestaltung der Dämpfungsblöcke, was den Fertigungsaufwand reduziert.

In einer besonders zu bevorzugenden Ausgestaltung kann der den schwenklagerseitigen Dämpfungsblock enthaltende Bereich der Haltestrebe mit einem dem Lagerbolzen zugeordneten Langloch versehen sein. Der den fixierlagerseitigen Dämpfungsblock tragende Bereich der Haltestrebe kann mit einem vom zugeordneten Lagerbolzen durchgriffenen, offenen Einfahrschlitz versehen sein. In vorteilhafter Weise kann dabei das Langloch und der Einfahrschlitz gegenüber der Aufnahmeausnehmung des jeweils zugeordneten Dämpfungsblockes Übermaß aufweisen. Diese Maßnahmen ergeben eine besonders hohe Sicherheit. Gleichzeitig ist sichergestellt, daß sich in der Fixierstellung der seitlichen Unterfahrschutzplanken nach Überwindung des vorgesehenen Übermaßes ein fester Anschlag ergibt, wodurch eine Überbeanspruchung bzw. Beschädigung der elastischen Dämpfungsblöcke vermieden wird. Dies trägt der Tatsache Rechnung, daß der seitliche Unterfahrschutz bei Lastkraftwagen unter Umständen als Aufstiegshilfe benutzt wird.

Vorteilhaft können die die beiden Dämpfungsblöcke enthaltenden Haltestreben als U-Profil mit die eingesetzten Dämpfungsblöcke flankierenden Schenkeln ausgebildet sein, die im Bereich des Veschiebeschwenklagers mit einem Langloch und im Bereich des Fixierlages mit einem offenen Einfahrschlitz versehen sind. Dabei kann das die Lagerbolzen tragende Tragstück ebenfalls als U-Profil ausgebildet sein. Dessen Schenkel können von den Lagerbolzen überbrückt sein, wobei die Breite der Dämpfungsblöcke höchstens der lichten Weite des die Lagerbolzen tragenden Tragstücke entspricht. Das Tragstück kann mit die Dämpfungsblöcke flankierenden Schenkeln zwischen die Schenkel der die Dämpfungsblöcke tragenden Haltestrebe einschwenkbar sein und mit Zapfen versehen sein, die in die Ausnehmungen der Schenkel der die Dämpfungsblöcke tragenden Haltestrebe eingreifen. Diese Maßnahmen ergeben eine sehr steife und robuste Anordnung, die vergleichsweise einfach herstellbar ist und dennoch die gewünschte Elastizität gewährleistet.

Zweckmäßig können bei einem seitlichen Unterfahrschutz jeder Haltestrebe zwei Tragstücke zugeordnet sein, die mit einander zugewandten Verschiebeschwenklagern angeordnet sind. Hierdurch wird erreicht, daß die seitlichen Unterfahrschutzplanken einzeln auf- bzw. abklappbar sind, wobei sich im geklappten Zustand nur eine vergleichsweise geringe Ausladung über die seitliche Fahrzeugbegrenzung ergibt. Gleichzeitig ist sichergestellt, daß beide Schwenkelemente in Schwerkraftrichtung in die Fixierstellung gebracht werden, so daß die Schwerkraft in vorteilhafter Weise einer Entlastung der seitlichen Unterfahrschutzplanken entgegenwirkt.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Fig. 1: eine Seitenansicht eines seitlichen Lkw-Unterfahrschutzes teilweise im Schnitt,
- Fig. 2: eine Vorderansicht des oberen Bereiches der Anordnung gemäß Fig. 1 mit abgenommener seitlicher Unterfahrschutzplanke
- Fig. 3: eine Draufsicht auf Fig. 2,
- Fig. 4: eine Variante zu Fig. 1,
- Fig. 4a: perspektivisch eine schematische Darstellung eines klemmend an der Haltestrebe befestigbaren Dämpfungsblockes,
- Fig. 5: einen Längsschnitt durch eine weitere Variante zu Fig. 1,
- Fig. 6: eine Teilansicht der Anordnung gemäß Fig. 5 mit geschwenkter seitlicher Unterfahrschutzplanke und
- Fig. 7: eine Variante zu Fig. 5.

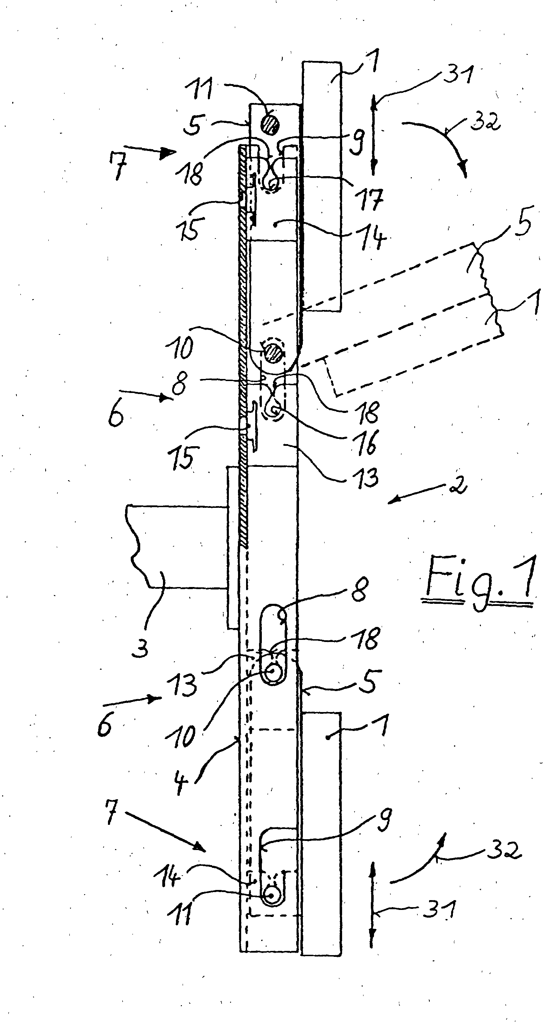

Bei Lastkraftwagen sind gegebenenfalls die von der Ladebrücke und den Rädern begrenzten Bereiche durch einen jeweils zugeordneten seitlichen Unterfahrschutz gesichert. Dieser kann aus mehreren, mit Abstand übereinander angeordneten seitlichen Unterfahrschutzplanken 1 bestehen. Bei der in Fig. 1 gezeigten Ausführungsversion sind zwei übereinander angeordnete seitliche Unterfahrschutzplanken 1 vorgesehen, die auf einer fahrzeugseitig angebrachten Aufnahmevorrichtung 2 augenommen sind. Diese enthält über die Bereichslänge verteilt angeordnete, durch Tragrohre 3 mit dem Fahrzeugchassis verbundene Haltestreben 4. Bei kleinerer Bereichslänge genügt eine mittlere Haltestrebe 4.

Die Unterfahrschutzplanken 1 sind an im Abstand der Haltestreben 4 angeordneten Tragstücken 5 befestigt, die schwenkbar auf der zugeordneten Haltestrebe 4 gelagert und in der in Fig. 1 mit durchgezogenen Linien angedeuteten, angeschwenkten Stellung geräuschmindernd fixierbar sind. Die Tragstücke 5 mit der jeweils zugeordneten Unterfahrschutzplanke 1 bilden praktisch einen insgesamt schwenkbaren und fixierbaren seitlichen Unterfahrschutz. Im dargestellten Ausführungsbeispiel sind die seitlichen Unterfahrschutzplanken 1 an den Tragstücken 5 angebracht. Alternativ hierzu können diese Tragstücke 5 in die seitlichen Unterfahrschutzplanken 1 integriert sein, so daß ein einteilges Bauteil vorliegt.

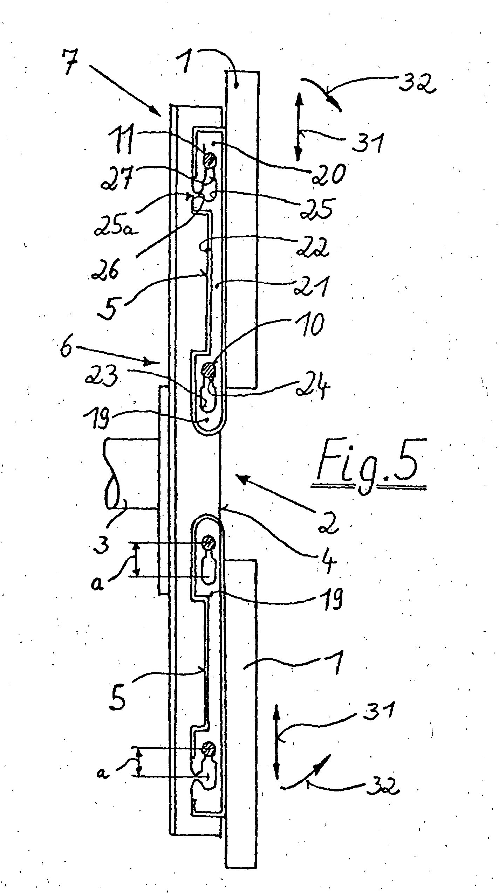

Die den Tragstücken 5 zugeordnete Lageranordnung umfaßt jeweils ein Verschiebeschwenklager 6 und ein hiervon distanziertes Fixierlager 7. Die beiden Lageranordnungen sind mit einander zugewandten Verschiebeschwenklagern 6 angeordnet, so daß nach vorläufigem Anheben der beiden Unterfahrschutzplanken 1 - entsprechend der Bewegungspfeile 31 - die obere Unterfahrschutzplanke 1 nach unten und die untere Unterfahrschutzplanke 1 nach oben von der Haltestrebe 4 wegschwenkbar ist, wie in den Fig. 1 und 5 durch Schwenkpfeile 32 angedeutet ist. Dies ermöglicht einen guten Zugang zu dem hinter dem seitlichen Unterfahrschutz sich befindenden Stauraum und stellt gleichzeitig sicher, daß sich in der Schwenkstellung der Überstand über die seitliche Fahrzeugbegrenzung in Grenzen hält.

Die Haltestreben 4 sind in Fig. 1 als Abschnitte eines U-Profils ausgebildet, dessen seitliche Schenkel im Bereich der Verschiebeschwenklager 6 mit Langlöchern 8 und im Bereich der Fixierlager 7 mit an einer Stelle offenen Einfahrschlitzen 9 versehen sind. Der Einfahrschlitz 9 des oberen Fixierlagers 7 endet im Bereich der oberen Kante der Haltestrebe 4 und ist dementsprechend als von oben zugänglicher Schlitz ausgebildet. Der Einfahrschlitz 9 des unteren Fixierlagers 7 ist abgewinkelt, so daß sich eine in Schwenkrichtung offene Einfahröffnung ergibt.

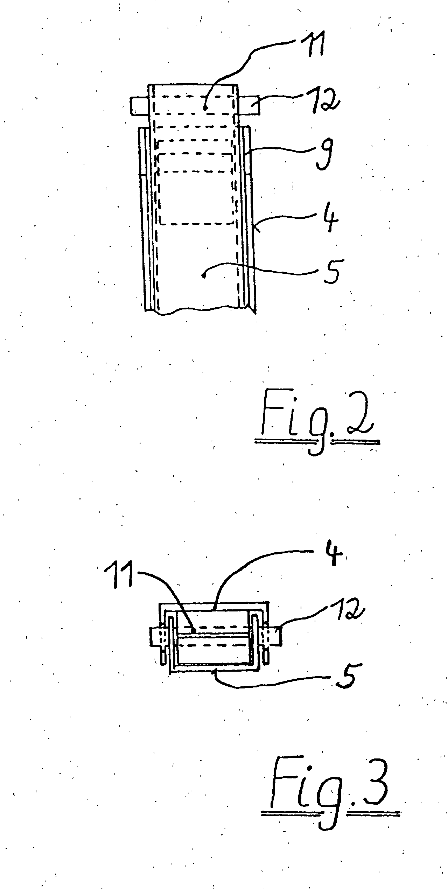

Die Tragstücke 5 sind hier ebenfalls als Abschnitte eines U-Profils ausgebildet, dessen seitliche Schenkel durch einen dem Verschiebeschwenklager 6 zugeordneten Lagerbolzen 10 und durch einen dem Fixierlager 7 zugeordneten Lagerbolzen 11 überbrückt sind. Die Tragstücke 5 sind so ausgebildet, daß sie zwischen den Schenkeln der Haltestrebe 4 angeordnet werden können (Fig. 3). Die Lagerbolzen 10, 11 sind dementsprechend mit seitlichen Zapfen 12 versehen, welche die miteinander fluchtenden Langlöcher 8 durchgreifen bzw. in die miteinander fluchtenden Einfahrschlitze 9 der seitlichen Schenkel der Haltestrebe 4 einführbar sind.

Im Bereich jedes Verschiebeschwenklagers 6 und jedes Fixierlagers 7 ist jeweils ein zugeordneter Dämpfungsblock 13 bzw. 14 vorgesehen. Dieser kann aus einem geeigneten Dämmungsmaterial , wie Gummi oder gummielastischem Kunststoff, bestehen. Die Dämpfungsblöcke 13, 14 sind bei den Anordnungen gemäß Fig. 1 bis 4 am Bereich zwischen den Schenkeln der Haltestrebe 4 plaziert. Bei der Anordnung gemäß den Fig. 1 bis 3 ist die Breite der Dämpfungsblöcke 13, 14 etwas kleiner als die lichte Weite des dem Tragstück 5 zugrundeliegenden U-Profils (Fig. 3). Hierdurch ergeben sich zwischen den Dämpfungsblöcken 13, 14 und den seitlichen Schenkeln der Haltestrebe 4 Schlitze, in die die Tragstücke 5 mit ihren seitlichen Schenkeln eingreifen können. Die Dämpfungsblöcke 13, 14 sind hier mit einvulkanisierten Halteschrauben 15 versehen und mit diesen am Steg der Haltestrebe 4 befestigt.

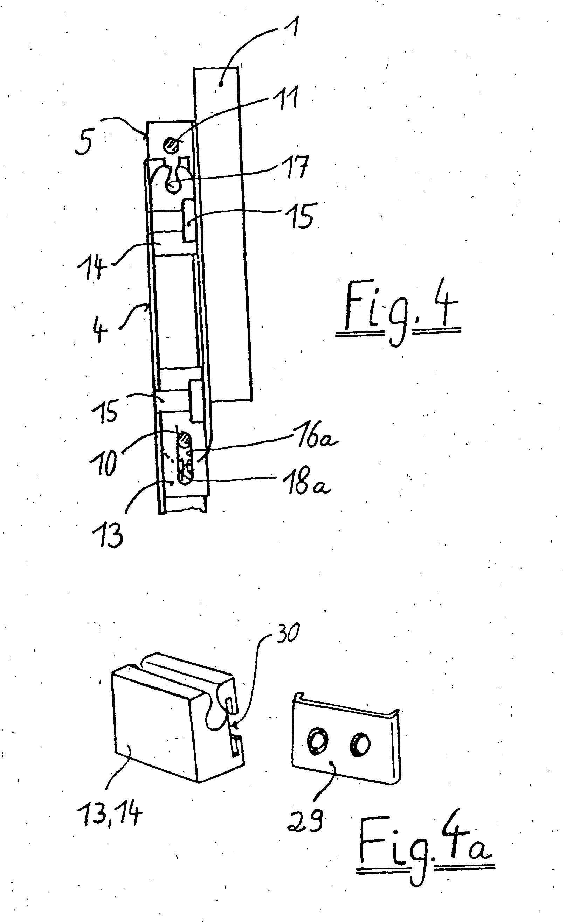

Bei der der Fig. 4 zugrundeliegenden Variante sind die Tragstücke 5 derart ausgestaltet, daß sie die Haltestrebe 4 umgreifen können. Hierbei können sich die Dämpfungsblöcke 13, 14 über die ganze lichte Weite der Haltestrebe 4 erstrecken. Die Dämpfungsblöcke 13, 14 können dabei in die Haltestrebe 4 einvulkanisiert sein und/oder über Befestigungsschrauben 15 auf den Haltestreben 4 befestigt sein.

Entsprechend Fig. 4a können die Dämpfungsblöcke 13, 14 auch über Klemmstücke 29 an den Haltestreben 4 klemmend befestigt sein. Die Dämpfungsblöcke 13, 14 weisen hiermit analogseitig eine T-förmige Hinterschneidung 30 auf, in die das jeweilige Klemmstück 29 klemmend eingreift. Das Klemmstück 29 ist in diesem Ausführungsbeispiel etwa U-förmig geformt und weist kurze, den Abstand des KLemmstückes 29 zur Haltestrebe 4 definierende Schenkel sowie Befestigungsbohrungen zur Aufnahme von Schrauben oder dergleichen auf.

Die Dämpfungsblöcke 13, 14 sind jeweils mit einer dem zugeordneten Lagerbolzen 10, 11 zugeordneten, im Bereich der Langlöcher 8 bzw. der Einfahrschlitze 9 angeordneten Aufnahmeausnehmung 16 bzw. 17 versehen. Die Aufnahmeausnehmung 17 des fixierlagerseitigen Dämpfungsblockes 14 ist bei den Anordnungen gemäß Fig. 1 bis 4 als nach oben offene, hinterschnittene Rastausnehmung ausgebildet. Durch die Hinterschneidung ergeben sich eingangsseitige Rastkanten 18. In die so gebildete Rastausnehmung ist der fixierlagerseitige Lagerbolzen 11 bei an die Haltestrebe 4 angelegtem Tragstück 5 mit seitlicher Unterfahrschutzplanke 1 durch eine nach unten gerichtete Verschiebebewegung einrastbar. Der entsprechende, in Fig. 1 durch einen vertikalen Bewegungspfeil 31 angedeutete Verschiebefreiheitsgrad wird dabei durch das Langloch 8 des jeweils zugeordneten Verschiebeschwenkagers 6 gegeben.

In Fig. 1 ist die untere Unterfahrschutzplanke 1 in eingerasteter Stellung fixiert. Demgegenüber befindet sich die obere Unterfahrschutzplanke 1 in ausgerasteter Stellung und kann, wie durch Bewegungs- und Schwenkpfeile 31, 32 angedeutet und mit unterbrochenen Linien gezeigt, in eine aufgeklappte Stellung gebracht werden. Die gegenseitige Zuordnung von fixierlagerseitigen Lagerbolzen 11 und zugeordneter Aufnahmeausnehmung 17 ist dabei so getroffen, daß der gesamte seitliche Unterfahrschutz zum Ausrasten entgegen der Schwerkraft - entsprechend der vertikalen Bewegungspfeile 31 - angehoben werden muß. Im Beispiel gemäß Fig. 1 sind beide fixierlagerseitigen Dämpfungsblöcke 14 mit einer nach oben offenen Aufnahmeausnehmung 17 versehen. Es wäre aber auch denkbar, den im Bereich der unteren, abgewinkelten Einfahrschlitze 9 vorgesehenen Dämpfungsblock 14 mit einer ebenfalls abgewinkelten, plankenseitig offenen Aufnahmeausnehmung zu versehen.

Bei der Anordnung gemäß Fig. 1 sind auch die Aufnahmeausnehmungen 16 der Dämpfungsblöcke 13 der Verschiebeschwenklager 6 als nach oben offene, hinterschnittene Rastausnehmungen ausgebildet, die mit eingangsseitigen Rastkanten 18 versehen sind. Die Dämpfungsblöcke 13 sind dabei so angeordnet, daß sich ihre Aufnahmeausnehmung 16 im unteren Bereich der zugehörigen Langlöcher 8 befindet, so daß der zugeordnete Lagerbolzen 10 gleichzeitig mit dem fixierlagerseitigen Bolzen 11 in die zugeordnete Rastausnehmung einrastbar ist, was die Fixierung verstärkt.

Bei der Anordnung gemäß Fig. 4 ist der Dämpfungsblock 13 des Verschiebeschwenklagers 6 mit einer als Langloch ausgebildeten Aufnahmeausnehmung 16a versehen, die vom zugeordneten Lagerbolzen 10 durchgriffen wird. Dieser bleibt daher in jeder Position im Eingriff mit der zugeordneten Aufnahmeausnehmung 16a.

Diese kann mit Rastkanten 18a versehen sein, die so angeordnet sind, daß sie den zugeordneten Lagerbolzen 10 in der Fixierstellung übergreifen.

Die Dämpfungsblöcke 13, 14 ergeben in jedem Fall eine verwindungsweiche, elastische Anordnung mit guter Geräuschminderung, wobei durch die zumindest fixierlagerseitige Rastanordnung auch eine zuverlässige Fixierung des Lagerbolzens 10 im Dämpfungsblock 13 erreicht wird. Die lagerseitigen Ausnehmungen der Haltestrebe 4 in Form der Langlöcher 8 und der Einfahrschlitze 9 besitzen, wie in Fig. 1 gezeigt, gegenüber den Aufnahmeausnehmungen 16 bzw. 17 der Dämpfungsblöcke 13, 14 Übermaß. Hierdurch wird sichergestellt, daß im Normalfall in der Rastposition keine Anlage der Lagerbolzen 11 bzw. deren seitlicher Zapfen 12 auf den Enden der zugeordneten, haltestrebenseitigen Langlöcher 8 und Einfahrschlitze 9 erfolgt. Sofern jedoch hohe Kräfte auftreten, beispielsweise im Falle einer Benutzung des Unterfahrschutzes als Aufstiegshilfe, werden die Dämpfungsblöcke 13, 14 so weit zusammengedrückt, daß die Zapfen 12 auf die unteren Enden der zugeordneten, haltestrebenseitigen Langlöcher 8 und Einfahrschlitze 9 auflaufen, wodurch sich ein fester Anschlag ergibt.

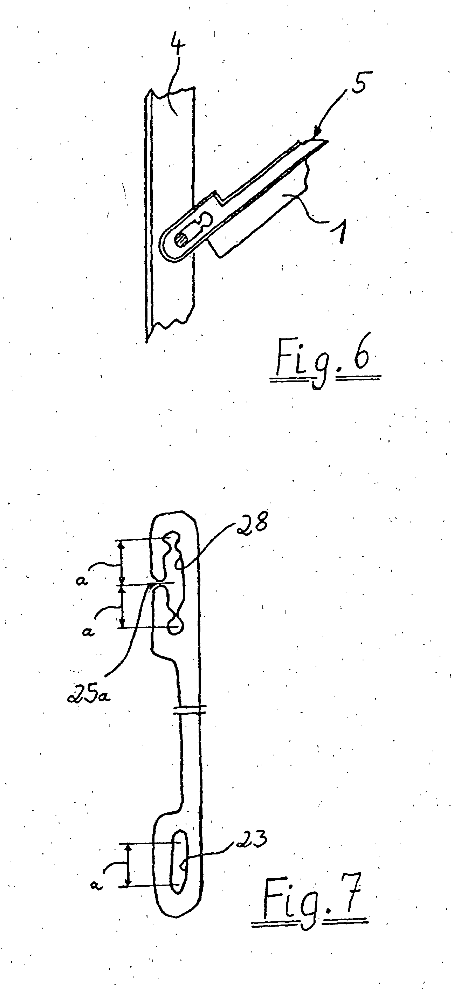

Bei der Anordnung gemäß den Fig. 5 und 6 sind die im Bereich der Verschiebeschwenklager 6 und Fixierlager 7 vorgesehenen Dämpfungsblöcke 19, 20 im Gegensatz zu den oben beschriebenen Varianten in die Tragstücke 5 integriert. Andererseits sind die Lagerbolzen 10, 11 auf der Haltestrebe 4 angeordnet. Die Haltestrebe 4 ist, wie bei den obigen Beispielen, als Abschnitt eines U-Profils ausgebildet. Die seitlichen Schenkel sind durch die den Verschiebeschwenklagern 6 und Fixierlagern 7 zugeordneten Lagerbolzen 10, 11 überbrückt, die dementsprechend stationär sind.

Die Dämpfungsblöcke 19, 20 sind in die Tragstücke 5 einvulkanisiert. Im dargestellten Beispiel sind ein jeweils dem betreffenden Verschiebeschwenklager 6 zugeordneter Dämpfungsblock 19 und ein dem betreffenden Fixierlager 7 zugeordneter Dämpfungsblock 20 an ein gemeinsames Gummiteil 21 angeformt, das von einer Umreifung 22 umfaßt ist. Den Schenkeln der Haltestrebe 4 können seitliche Abdeckflansche zugeordnet sein.

Die verschiebeschwenklagerseitigen Dämpfungsblöcke 19 besitzen jeweils ein als Aufnahmeausnehmung fungierendes Langloch 23, das der zugeordnete, stationäre Lagerbolzen 10 durchgreift. Sofern das betreffende Tragstück 5 mit seitlichen Abdeckflanschen versehen ist, sind auch diese mit entsprechenden Langlöchern versehen, wobei diese zweckmäßig gegenüber dem Langloch 23 Übermaß besitzen können. Das Langloch 23 ist hier mit Rastkanten 24 versehen, die den zugeordneten Lagerbolzen 10 in der Fixierstellung hintergreifen (Fig. 5). Die fixierlagerseitigen Dämpfungsblöcke 20 besitzen jeweils eine abgewinkelte, als Einfahrschlitz ausgebildete Aufnahmeausnehmung 25 in Form eines mit einer von der zugeordneten Flanke 1 abgewandten Öffnung 25a versehenen Schlitzes. Die Öffnung 25a ist durch Rastkanten 26 begrenzt, so daß der zugeordnete Lagerbolzen 11 bei geeigneter Stellung des seitlichen Unterfahrschutzes ein- und ausrastbar ist. Die Umreifung 22 ist im Bereich der Öffnung 25a entsprechend unterbrochen. Sofern die Tragstücke 5 mit seitlichen Abdeckflanschen versehen sind, sind auch diese mit - der Aufnahmeausnehmung 25 entsprechenden - Einfahrschlitzen versehen, wobei wiederum das oben schon erwähnte Übermaß vorgesehen sein soll. Im Bereich des langlochartigen Abschnittes der Aufnahmeausnehmung 25 sind Rastkanten 27 vorgesehen, die den zugeordneten Lagerbolzen 11 in der dargestellten Fixierstellung hintergreifen.

Der Abstand der Öffnung 25a der Aufnahmeausnehmung 25 vom oberen, von den Rastkanten 27 hintergriffenen Ende der Aufnahmeausnehmung 25 entspricht der Länge des verschiebeschwenklagerseitigen Langloches 23, wie durch das Maß a in Fig. 5 angedeutet ist. Um von der der Fig. 5 zugrundeliegenden Fixierstellung zu der in Fig. 6 angedeuteten Schwenkstellung zu gelangen, wird der aus den Unterfahrschutzplanken 1 und den Tragstücken 5 bestehende seitliche Unterfahrschutz soweit angehoben, daß die Öffnung 25a der Aufnahmeausnehmung 25 in den Bereich des stationären Lagerbolzens 22 gelangt und dieser, unter entsprechender Verformung der eingangsseitigen Rastkanten 26, außer Eingriff mit dem fixierlagerseitigen Dämpfungsblock 20 gebracht werden kann. Bei der Rückführung des seitlichen Unterfahrschutzes laufen diese Vorgänge in umgekehrter Richtung ab.

Bei der Ausführung gemäß Fig. 5 befindet sich die Öffnung 25a der Aufnahmeausnehmung 25 im Bereich des unteren Endes des langlochartigen Abschnittes der Aufnahmeausnehmung 25. Da die den beiden Unterfahrschutzplanken 1 zugeordneten Verschiebeschwenklager 6 einander benachbart sind, werden bei der Anordnung gemäß Fig. 5 für die obere und die untere Unterfahrschutzplanke 1 Tragstücke 5 mit unterschiedlich ausgebildeten Dämpfungsblöcken benötigt. Um dies zu vermeiden, kann die fixierlagerseitige Aufnahmeausnehmung 25, wie in Fig. 7 gezeigt ist, einen zu einer mittleren Öffnung 25a symmetrischen Langlochbereich 28 aufweisen.

## Patentansprüche

1. Vorrichtung zur Aufnahme von schwenk- und fixierbaren seitlichen Unterfahrschutzplanken (1) eines Lastkraftwagens, wobei den seitlichen Unterfahrschutzplanken (1) wenigstens ein Tragstück (5) zugeordnet ist, das mittels einer Lageranordnung an einer rahmenfest angeordneten Haltestrebe (4) schwenkbar gelagert und in einer an die Haltestrebe (4) angeschwenkten Stellung fixierbar ist, wobei die Lageranordnung an der Haltestrebe (4) ein Verschiebeschwenklager (6) mit einem einem Langloch (8, 16a, 23) zugeordneten Lagerbolzen (10) und ein hiervon distanziertes Fixierlager (7) mit einem in und außer Rasteingriff mit einer Rastausnehmung bringbaren Lagerbolzen (11) aufweist, **dadurch gekennzeichnet, daß** im Bereich jedes Lagers (6, 7) ein aus einem Dämpfungsmaterial bestehender Dämpfungsblock (13, 14; 19, 20) vorgesehen ist, der jeweils mit einer dem zugehörigen Lagerbolzen (10, 11) zugeordneten Aufnahmeausnehmung (16, 17; 23, 25) versehen ist, und wobei zumindest die Aufnahmeausnehmung (17; 25) des dem Fixierlager (7) zugeordneten Dämpfungsblockes (14; 20) als offene Rastausnehmung ausgebildet ist.

2. Vorrichtung nach Anspruch 1, **dadurch gekennzeichnet, daß** der den verschiebeschwenklagerseitigen Dämpfungsblock (13; 19) enthaltende Bereich der Haltestrebe (4) mit einem dem Lagerbolzen (10) zugeordneten Langloch (8) versehen ist, und daß der den fixierlagerseitigen Dämpfungsblock (14; 20) tragende Bereich der Haltestrebe (4) mit einem offenen Einfahrschlitz (9) versehen ist.

3. Vorrichtung nach einem der vorhergehenden Ansprüche 1 und 2, **dadurch gekennzeichnet, daß** die Aufnahmeausnehmung (16; 23) des dem Verschiebeschwenklager (6) zugeordneten Dämpfungsblockes (13; 19) mit Rastkanten (18; 24) versehen ist, die den zugeordneten Lagerbolzen (10) in der Fixierstellung hintergreifen.

4. Vorrichtung nach einem der vorhergehenden Ansprüche 1 bis 3, **dadurch gekennzeichnet, daß** die Aufnahmeausnehmung (16) des dem Verschiebeschwenklager (6) zugeordneten Dämpfungsblockes (13) als offene Rastausnehmung ausgebildet ist.

5. Vorrichtung nach Anspruch 1, **dadurch gekennzeichnet, daß** die Aufnahmeausnehmung (17) des dem Fixierlager (7) zugeordneten Dämpfungsblockes (14) in Verschieberichtung offen ist, und daß das Fixierlager (7) so ausgebildet und angeordnet ist, daß die auf die seitliche Unterfahrschutzplanke (1) wirkende Schwerkraft einer Entrastung des Fixierlagers (7) entgegenwirkt.

6. Vorrichtung nach einem oder mehreren der vorhergehenden Ansprüche 1 bis 5, **dadurch gekennzeichnet, daß** die Aufnahmeausnehmung (25) des dem Fixierlager (7) zugeordneten Dämpfungsblockes (20) einen Langlochbereich mit einer hiervon abgehenden, mit Rastkanten (26) versehenen Öffnung (25a) aufweist, wobei ein Abstand (a) zwischen der Öffnung (25a) und dem Ende der Aufnahmeausnehmung (25) höchstens einer Länge (a) der der Verschiebeschwenklager (6) zugeordneten langlochartigen Aufnahmeausnehmung (23) entspricht.

7. Vorrichtung nach einem oder mehreren der vorhergehenden Ansprüche 1 bis 6, **dadurch gekennzeichnet, daß** die Aufnahmeausnehmung (25) des fixierlagerseitigen Dämpfungsblockes (20) symmetrisch zu einer auf halber Länge angeordneten Öffnung (25a) ausgebildet ist.

8. Vorrichtung nach einem der vorhergehenden Ansprüche 1 bis 7, **dadurch gekennzeichnet, daß** das Langloch (8) und der Einfahrschlitz (9) der die Dämpfungsblöcke (13, 14; 19, 20) enthaltenden Haltestrebe (4) gegenüber der dämpfungsblockseitigen Aufnahmeausnehmung (16, 17; 23, 25) Übermaß aufweist.

9. Vorrichtung nach einem der vorhergehenden Ansprüche 1 bis 8, **dadurch gekennzeichnet, daß** die die beiden Dämpfungsblöcke (13, 14; 19, 20) enthaltende Haltestrebe (4) als U-Profil mit die eingesetzten Dämpfungsblöcke (13, 14; 19, 20) flankierenden Schenkeln ausgebildet ist, die im Bereich des Verschiebeschwenklagers (6) mit dem Langloch (8) und im Bereich des Fixierlagers (7) mit dem offenen Einfahrschlitz (9) versehen sind, und daß das die Lagerbolzen (10, 11) tragende Tragstück (5) ebenfalls als U-Profil ausgebildet ist, dessen Schenkel von den Lagerbolzen (10, 11) überbrückt sind.

10. Vorrichtung nach einem oder mehreren der vorhergehenden Ansprüche 1 bis 9 **dadurch gekennzeichnet, daß** die Breite der Dämpfungsblöcke (13, 14; 19, 20) höchstens der lichten Weite des die Lagerbolzen (10, 11) tragenden Tragstückes (5) entspricht, das mit die Dämpfungsblöcke (13, 14; 19, 20) flankierenden Schenkeln zwischen die Schenkel der die Dämpfungsblöcke (13, 14; 19, 20) tragenden Haltestrebe (4) einschwenkbar ist und mit in die Ausnehmungen der Schenkel der die Dämpfungsblöcke (13, 14; 19, 20) tragenden Haltestrebe (4) eingreifenden Zapfen (12) versehen ist.

11. Vorrichtung nach einem der vorhergehenden Ansprüche 1 bis 10, **dadurch gekennzeichnet, daß** jeder Haltestrebe (4) zwei Tragstücke (5) zugeordnet sind, die mit, den einander zugewandten Verschiebeschwenklagern (6) versehen sind, und daß jedem Tragstück (5) wenigstens eine Unterfahrschutzplanke (1) zugeordnet ist.

12. Vorrichtung nach einem der vorhergehenden Ansprüche 1 bis 11, **dadurch gekennzeichnet, daß** die Dämpfungsblöcke (13, 14) mit einvulkanisierten Halteschrauben (15) versehen sind, oder daß die Dämpfungsblöcke (13, 14) T-förmige Hinterschneidungen (30) zur klemmenden Aufnahme von an den Haltestreben (4) befestigbaren Klemmstücken (29) aufweisen, und daß die Dämpfungsblöcke (13, 14; 19, 20) aus Gummi oder gummielastischem Kunststoff bestehen.

13. Vorrichtung nach einem der vorhergehenden Ansprüche, **dadurch gekennzeichnet, daß** die Tragstücke (5) und die seitlichen Unterfahrschutzplanken (1) ein einteiliges Bauteil sind.

## Claims

1. Device for supporting slewable and fixable lateral underride guard panels (1) on a truck, whereby at least one carrier element (5) is allocated to said lateral underride guard panels (1), is, by means of a bearing arrangement, slewably mounted on a support strut (4) rigidly fixed to the frame and can be fixed in a position to which it is slewed so that it contacts the support strut (4), whereby the bearing arrangement on the support strut (4) has a shift-type drag bearing (6) with a bearing pin (10) allocated to a longitudinal slot (8, 16a, 23) and a positioning bearing (7) with a bearing pin (11) which can be engaged and disengaged in a locking recess, whereby said positioning bearing (7) is placed at a distance from said bearing pin (10), **characterised in that** in the area of each and every bearing (6, 7) a damping block (13, 14; 19, 20) consisting of damping material is provided, each of damping blocks (13, 14; 19, 20) is provided with a support recess (16, 17; 23, 25) allocated to the associated bearing pin (10, 11), and whereby at least the support recess (17; 25) of the damping block (14; 20) allocated to the positioning bearing (7) is designed as an open locking recess.

2. Device according to Claim 1, **characterised in that** the area of the support strut (4) that contains the damping block (13; 19) facing the shift-type drag bearing (6) and is provided with a longitudinal slot (8) allocated to the bearing pin (10) and that the area of the support strut (4) carries the damping block (14; 20) facing the positioning bearing (7) and is provided with an open penetration slot (9).

3. Device according to one of the foregoing Claims 1 and 2, **characterised in that** the support recess (16; 23) of the damping block (13; 19) allocated to the shift-type drag bearing (6) is provided with locking edges (18; 24) which engage behind the associated bearing pin (10) in the locking position.

4. Device according to one of the foregoing Claims 1 to 3, **characterised in that** the support recess (16) of the damping block (13) allocated to the shift-type drag bearing (6) is designed as an open detent recess.

5. Device according to Claim 1, **characterised in that** the support recess (17) of the damping block (14) allocated to the positioning bearing (7) is open in the shifting direction and that the positioning bearing (7) is designed and arranged so that the gravity acting on the lateral underride guard panel (1) counteracts the unlocking action of the positioning bearing (7).

6. Device according to one or several of the foregoing Claims 1 to 5, **characterised in that** the support recess (25) of the damping block (20) allocated to the positioning bearing (7) has a longitudinal slot area with an orifice (25a) provided with detent edges (26), whereby a distance (a) between the orifice (25a) and the end of said support recess (25) does not exceed a length (a) of the longitudinal-slot-type support recess (23) allocated to said shift-type drag bearing (6).

7. Device according to one or several of the foregoing Claims 1 to 6, **characterised in that** the support recess (25) of the damping block (20) facing the positioning bearing (7) is designed symmetrically relative to an orifice (25a) arranged half-way along it.

8. Device according to one of the foregoing Claims 1 to 7, **characterised in that** the longitudinal slot (8) and the penetration slot (9) of the support strut (4) containing the damping blocks (13, 14; 19, 20) has an overdimension in respect of the support recess (16, 17; 23, 25) facing said damping blocks (13, 14; 19, 20).

9. Device according to one of the foregoing Claims 1 to 8, **characterised in that** the support strut (4) containing the two damping blocks (13, 14; 19, 20) is designed as a U-section with legs flanking the inserted damping blocks (13, 14; 19, 20), which legs are provided with the longitudinal slot (8) in the area of the shift-type drag bearing (6) and with the open penetration slot (9) in the area of the positioning bearing (7) and that the carrier element (5) carrying the bearing pins (10, 11) is also designed as a U-section and has legs which are bridged by said bearing pins (10, 11).

10. Device according to one or several of the foregoing Claims 1 to 9, **characterised in that** the width of the damping blocks (13, 14; 19, 20) is at most identical with the clear width of the carrier element (5) which carries the bearing pins (10, 11) and can, with legs flanking the damping blocks (13, 14; 19, 20), be slewed in between the legs of the support strut (4) carrying the damping blocks (13, 14; 19, 20) and is provided with pins (12) meshing with the recesses in the legs of said support strut (4) carrying the damping blocks (13, 14; 19, 20).

11. Device according to one of the foregoing Claims 1 to 10, **characterised in that** two carrier elements (5) are allocated to each support strut (4) and are provided with the shift-type drag bearings (6) facing each other, and that at least one underride guard panel (1) is allocated to each carrier element (5).

12. Device according to one of the foregoing Claims 1 to 11, **characterised in that** the damping blocks (13, 14) are provided with holding screws (15) vulcanised into place or that the damping blocks (13, 14) feature T-shaped recesses (30) for the clamp-type support of clamping elements (29) which can be fastened to the support struts (4) and that the damping blocks (13, 14; 19, 20) consist of rubber or rubber-elastic synthetic material.

13. Device according to one of the foregoing Claims, **characterised in that** the carrier elements (5) and the lateral underride guard panels (1) are a singlepiece component.

## Revendications

1. Dispositif destiné à recevoir des gardes latérales anti-encastrement escamotables et blocables (1) d'un camion, auxquelles est associée au moins une attache (5) montée pivotante, au moyen d'une articulation, dans une chape (4) solidaire du châssis et blocable dans une position articulée dans la chape (4), l'articulation de la chape (4) présentant un palier d'articulation coulissant (6) doté d'un axe d'articulation (10) associé à un trou oblong (8, 16a, 23) et, à distance dudit palier, un palier de blocage (7) doté d'un axe d'articulation (11) pouvant être amené à s'encliqueter dans une échancrure d'encliquetage et à s'en désencliqueter, **caractérisé en ce qu'**il est prévu au niveau de chaque palier (6, 7) un bloc amortisseur (13, 14 ; 19, 20) constitué d'un matériau amortisseur et doté d'une échancrure de réception (16, 17 ; 23, 25) associée à l'axe d'articulation correspondant (10, 11) et qu'au moins l'échancrure de réception (17 ; 25) du bloc amortisseur (14 ; 20) associé au palier de blocage (7) se présente sous forme d'échancrure d'encliquetage ouverte.

2. Dispositif selon la revendication 1, **caractérisé en ce que** la zone de la chape (4) contenant le bloc amortisseur (13 ; 19) situé du côté du palier d'articulation coulissant (6) est dotée d'un trou oblong (8) associé à l'axe d'articulation (10) et que la zone portant le bloc amortisseur (14 ; 20) situé du côté du palier de blocage (7) est doté d'une fente d'engagement ouverte (9).

3. Dispositif selon l'une des revendications 1 et 2 précédentes, **caractérisé en ce que** l'échancrure de réception (16 ; 23) du bloc amortisseur (13 ; 19) associé au palier d'articulation coulissant (6) est dotée d'arêtes d'encliquetage (18 ; 24) qui emprisonnent l'axe d'articulation associé (10) dans la position de blocage.

4. Dispositif selon l'une des revendications 1 à 3 précédentes, **caractérisé en ce que** l'échancrure de réception (16) du bloc amortisseur (13) associé au palier d'articulation coulissant (6) se présente sous forme d'échancrure d'encliquetage ouverte.

5. Dispositif selon la revendication 1, **caractérisé en ce que** l'échancrure de réception (17) du bloc amortisseur (14) associé au palier de blocage (7) est ouverte dans le sens du coulissement et que le palier de blocage (7) est configuré et disposé de telle manière que la force de gravité agissant sur la garde latérale anti-encastrement (1) s'oppose à un désencliquetage du palier de blocage (7).

6. Dispositif selon l'une ou plusieurs des revendications 1 à 5 précédentes, **caractérisé en ce que** l'échancrure de réception (25) du bloc amortisseur (20) associé au palier de blocage (7) présente une zone à trou oblong d'où part une ouverture (25a) dotée d'arêtes d'encliquetage (26), la distance (a) entre l'ouverture (25a) et l'extrémité de l'échancrure de réception (25) correspondant au maximum à la longueur (a) de l'échancrure de réception (23) en forme de trou oblong associée au palier d'articulation coulissant (6).

7. Dispositif selon l'une ou plusieurs des revendications 1 à 6 précédentes, **caractérisé en ce que** l'échancrure de réception (25) du bloc amortisseur (20) situé du côté du palier de blocage (7) est symétrique par rapport à une ouverture (25a) disposée à milongueur.

8. Dispositif selon l'une des revendications 1 à 7 précédentes, **caractérisé en ce que** le trou oblong (8) et la fente d'engagement (9) de la chape (4) contenant les blocs amortisseurs (13, 14 ; 19, 20) présentent une surcote par rapport à l'échancrure de réception (16, 17 ; 23, 25) située du côté des blocs amortisseurs.

9. Dispositif selon l'une des revendications 1 à 8 précédentes, **caractérisé en ce que** la chape (4) contenant les deux blocs amortisseurs (13, 14 ; 19, 20) se présente sous forme de profilé en U dont les ailes bordent les blocs amortisseurs insérés (13, 14 ; 19, 20) et sont dotées, au niveau du palier d'articulation coulissant (6), du trou oblong (8) et, au niveau du palier de blocage (7), de la fente d'engagement ouverte (9) et que l'attache (5) portant les axes d'articulation (10, 11) se présente également sous forme de profilé en U dont les ailes sont pontées par les axes d'articulation (10, 11).

10. Dispositif selon l'une ou plusieurs des revendications 1 à 9 précédentes, **caractérisé en ce que** la largeur de blocs amortisseurs (13, 14 ; 19, 20) correspond au maximum à la largeur intérieure de l'attache (5) portant les axes d'articulation (10, 11), ladite attache (5) étant rabattable par des ailes bordant les blocs amortisseurs (13, 14 ; 19, 20) entre les ailes de la chape (4) portant les blocs amortisseurs (13, 14 ; 19, 20) et étant dotée d'axes (12) s'encliquetant dans les échancrures des ailes de la chape (4) portant les blocs amortisseurs (13, 14 ; 19, 20).

11. Dispositif selon l'une des revendications 1 à 10 précédentes, **caractérisé en ce qu'**à chaque chape (4) sont associées deux attaches (5) dotées des paliers d'articulation coulissants en regard (6) et qu'à chaque attache (5) est associée au moins une garde latérale anti-encastrement (1).

12. Dispositif selon l'une des revendications 1 à 11 précédentes, **caractérisé en ce que** les blocs amortisseurs (13, 14) sont dotés de vis de maintien vulcanisées (15) ou que les blocs amortisseurs (13, 14) présentent des contre-dépouilles en T (30) destinées à recevoir par serrage des cales (29) fixables aux chapes (4) et que les blocs amortisseurs (13, 14 ; 19, 20) sont en caoutchouc ou en matière plastique ayant l'élasticité du caoutchouc.

13. Dispositif selon l'une des revendications précédentes, **caractérisé en ce que** les attaches (5) et les gardes latérales anti-encastrement (1) constituent un composant monobloc.
